# EUROPEAN PATENT APPLICATION

(11) **EP 4 231 242 A1**
(43) Date of publication of application: **23.08.2023**
(21) Application number: 21885318.2
(22) Date of filing: 29.10.2021
(51) Int. Cl.: G06T 15/04

(54) **GRAPHICS RENDERING METHOD AND RELATED DEVICE THEREOF**

(30) Priority: 30.10.2020 CN 202011192352
(71) Applicant: Huawei Technologies Co., Ltd., Shenzhen, Guangdong 518129 (CN)
(72) Inventor: YANG, Chengyun, Shenzhen, Guangdong 518129 (CN); WANG, Shu, Shenzhen, Guangdong 518129 (CN); WU, Jiangzheng, Shenzhen, Guangdong 518129 (CN)
(74) Representative: Pfenning, Meinig & Partner mbB
(86) International application number: PCT/CN2021/127476
(87) International publication number: WO 2022/089592

(57) **Abstract**

A graphics rendering method is provided, where the method includes: obtaining vertex data of N to-be-rendered vertices; and if a load amount of a GPU is greater than a preset value, obtaining M to-be-rendered vertices from the N to-be-rendered vertices based on the vertex data of the N to-be-rendered vertices, where the M to-be-rendered vertices are vertices visible within an angle of view of a user, and M is a positive integer less than N; and transferring vertex data of the M to-be-rendered vertices to the GPU, so that the GPU performs graphics rendering. When the load amount of the GPU is large, a vertex that is invisible in the angle of view of the user is culled, so that a quantity of vertices that need to be rendered on a GPU side is reduced, thereby reducing the load of the GPU.

## Description

This application claims priority to Chinese Patent Application No. 202011192352.3, filed with the China National Intellectual Property Administration on October 30, 2020, and entitled "GRAPHICS RENDERING METHOD AND RELATED DEVICE", which is incorporated herein by reference in its entirety.

### TECHNICAL FIELD

This application relates to the field of image processing technologies, and more specifically, to a graphics rendering method and apparatus, and a computer-readable storage medium.

### BACKGROUND

A graphics processing unit (graphics processing unit, GPU) is a microprocessor dedicated to an image operation, and is usually configured to perform graphics rendering.

In a conventional solution, during graphics rendering, an entire image rendering process is usually performed by a GPU. However, when load of the GPU is heavy, for example, when an operation amount of graphics rendering is large (for example, in a case of in-depth graphics display) or the GPU needs to process a large quantity of other operations (for example, the GPU simultaneously performs graphics rendering and participates in large-scale scientific computing), if the conventional solution is used to perform graphics rendering, the GPU is overloaded, affecting performance of the GPU during image rendering.

### SUMMARY

This application provides a graphics rendering method and apparatus, and a computer-readable storage medium, to reduce load of a GPU during graphics rendering.

According to a first aspect, this application provides a graphics rendering method, where the method is applied to a terminal device, the terminal device includes a graphics processing unit GPU, and the method includes: obtaining vertex data of N to-be-rendered vertices. In an embodiment of this application, a CPU in the terminal device may obtain a plurality of first draw calls (draw calls), where the plurality of first draw calls invoke the vertex data of the N to-be-rendered vertices, and the vertex data of the to-be-rendered vertex may include but is not limited to a vertex location, a normal, UV coordinates, an index, and the like. A draw call instruction is a graphics application programming interface instruction, a quantity of draw call instructions is the same as a quantity of times of graphics drawing of a cross-platform graphics application programming interface, and the draw call instruction may specifically include but is not limited to instructions such as glDrawArrays and glDrawElements.

If a load amount of the GPU is greater than a preset value, M to-be-rendered vertices are obtained from the N to-be-rendered vertices based on the vertex data of the N to-be-rendered vertices, where the M to-be-rendered vertices are vertices visible within an angle of view of a user, and M is a positive integer less than N. The CPU may first determine current load amount of the GPU, where the load amount of the GPU may be related to at least one of the following: a quantity of draw calls (draw calls) that need to be processed when the GPU renders a frame of image, a quantity of to-be-rendered vertices that need to be processed when the GPU renders a frame of image, a quantity of to-be-rendered textures that need to be processed when the GPU renders a frame of image, and frequency usage of the GPU. In this embodiment of this application, the vertex data of the to-be-rendered vertices may be all vertex data or some vertex data required for one time of graphics drawing. In addition to the vertex data within the angle of view of the user, the vertex data of the to-be-rendered vertices may further include vertex data outside the angle of view of the user. That the CPU process the vertex data of the to-be-rendered vertices to obtain the vertex data within the angle of view of the user is equivalent to removing the vertex data outside the angle of view of the user from to-be-processed vertex data to obtain the vertex data within the angle of view of the user.

It should be understood that the vertex data within the angle of view of the user may be vertex location information of an image of an object visible within the angle of view of the user, and the image of the object visible within the angle of view of the user can be finally obtained by processing the vertex data within the angle of view of the user.

Vertex data of the M to-be-rendered vertices is transferred to the GPU, so that the GPU performs graphics rendering.

In this embodiment of this application, the CPU may update the plurality of first draw calls based on the vertex data of the M to-be-rendered vertices, to obtain a plurality of second draw calls, where the plurality of second draw calls invoke the vertex data of the M to-be-rendered vertices; and transfer the plurality of second draw calls to the GPU.

After vertex culling is completed, vertex data of vertices obtained after the culling may be updated. Specifically, after the culling is completed, corresponding vertex (vertex) data and index (index) data may be updated, and the data is sent to a rendering pipeline (pipeline) of the GPU as data input of a draw call instruction.

According to the foregoing method, when the load amount of the GPU is large, a vertex that is invisible in the angle of view of the user is culled, so that a quantity of vertices that need to be rendered on a GPU side is reduced, thereby reducing the load of the GPU.

In a possible implementation, the N to-be-rendered vertices are used to form a plurality of to-be-rendered model meshes, each to-be-rendered model mesh includes a plurality of triangular networks, vertices of each triangular network include a plurality of to-be-rendered vertices of the N to-be-rendered vertices, and the obtaining M to-be-rendered vertices from the N to-be-rendered vertices based on the vertex data of the N to-be-rendered vertices includes:
culling, based on vertex data of the vertices of the triangular networks in each to-be-rendered model mesh, a model mesh in which all or some vertices are invisible within the angle of view of the user from the plurality of to-be-rendered model meshes, to obtain a plurality of culled model meshes, where the plurality of culled model meshes include the M to-be-rendered vertices.

In this embodiment of this application, culling (culling) may be to cull an invisible model mesh in a scene, and finally, only a visible model mesh participates in rendering computing. Culling may include at least one of back-face culling, frustum culling, and occlusion culling. The CPU may obtain a plurality of to-be-rendered model meshes (meshes) from a vertex buffer. The model mesh may be represented by a triangular mesh (or referred to as a triangular network). Each triangular network includes three vertices. Vertex data of the vertices may include but is not limited to a location, a normal, UV coordinates, and the like. One vertex can be shared by a plurality of adjacent triangles. More complex model meshes indicate more triangle vertices.

In a possible implementation, the method further includes:
obtaining computing resources currently available to the central processing unit CPU; and
determining, based on the computing resources, a quantity of triangular networks included in each to-be-rendered model mesh of the plurality of to-be-rendered model meshes, where more computing resources indicates more triangular networks included in each to-be-rendered model mesh, and less computing resources indicates less triangular networks included in each to-be-rendered model mesh.

In this embodiment of this application, the CPU may adjust the quantity of triangular networks included in each model mesh. If the model mesh includes a large quantity of triangular networks, load of performing culling (culling) on a CPU side is light (a quantity of times of performing culling operations decreases), but a probability that the model mesh is culled is reduced, load on the GPU side increases (a probability that the model mesh is culled is reduced, resulting in that a quantity of remaining to-be-rendered vertices increases, and thereby increasing the load on the GPU side). If a quantity of triangular networks included in the model mesh is small, load of performing culling (culling) on a CPU side is heavy (a quantity of culling operations increases), and a probability that the model mesh is culled increases, load on the GPU side decreases (a probability that the model mesh is culled increases, so that a quantity of remaining to-be-rendered vertices decreases, thereby reducing the load on the GPU side).

Specifically, the CPU may first determine that a quantity of triangular networks included in each model mesh is 1, and evaluate CPU and GPU load. If the CPU side is heavily loaded, the CPU increases the quantity of triangular networks included in each model mesh, to dynamically adjust the load of the CPU and that of the GPU.

In this embodiment, the CPU may dynamically set, based on an actual CPU load situation, the quantity of triangular networks included in the model mesh, to adapt to mobile devices having different CPU computing power.

In a possible implementation, the culling, based on vertex data of the vertices of the triangular networks in each to-be-rendered model mesh, a model mesh in which all or some vertices are invisible within the angle of view of the user from the plurality of to-be-rendered model meshes includes:
culling, based on the vertex data of the vertices of the triangular networks in each to-be-rendered model mesh by performing at least one of back-face culling, frustum culling, and occlusion culling, the model mesh in which all or some vertices are invisible within the angle of view of the user from the plurality of to-be-rendered model meshes.

In this embodiment of this application, the CPU may perform frustum culling based on a bounding box of each model mesh, and perform back-face culling based on safe space cone area information and a current camera (camera) location. The frustum culling culls a model network that falls outside a frustum, to avoid unnecessary rendering on these objects. Specifically, if a camera is located in a bounding box of a model mesh in a world space, the model mesh is reserved; and space conversion is performed on eight points of the model mesh by using a model-view-projection transformation (model-view-projection matrix, MVP) matrix to convert the eight points into a clip space (where the clip space is a coordinate space obtained after MVP transformation is performed on model vertices). For example, if a mapped point in any clip space is located in a frustum space, the model mesh is reserved. If each point is not located in the frustum space, bounding box calculation is performed on the eight mapped points again to form a bounding box based on the clip space. Then, a point with a minimum value and a point with a maximum value of the bounding box are marked with bits. If the model mesh is located on one side of a frustum plane, the model mesh is culled. Otherwise, the model mesh is reserved.

In this embodiment of this application, the back-face culling means that a closed model mesh may always be divided into two parts in a direction of a camera viewpoint. A back part is blocked by a front part, and the back part may be culled and does not need to participate in rendering. Specifically, the CPU may convert an obtained camera position (camera position) in the world space into a local space, and compare the obtained camera position (camera position) with a safe space cone in the model mesh. If the camera (camera) is located in the safe space cone, the model mesh is reserved; otherwise, the model mesh is culled.

In a possible implementation, the load amount of the GPU is related to at least one of the following:
a quantity of draw calls (draw calls) that need to be processed when the GPU renders a frame of image;
a quantity of to-be-rendered vertices that need to be processed when the GPU renders a frame of image;
a quantity of to-be-rendered textures that need to be processed when the GPU renders a frame of image; and
frequency usage of the GPU.

In a possible implementation, the obtaining vertex data of N to-be-rendered vertices includes: obtaining a plurality of first draw calls (draw calls), where the plurality of first draw calls invoke the vertex data of the N to-be-rendered vertices; and correspondingly, the transferring the vertex data of the M to-be-rendered vertices to the GPU includes:
updating the plurality of first draw calls based on the vertex data of the M to-be-rendered vertices, to obtain a plurality of second draw calls, where the plurality of second draw calls invoke the vertex data of the M to-be-rendered vertices; and
transferring the plurality of second draw calls to the GPU.

According to a second aspect, this application provides a graphics rendering method, where the method is applied to a terminal device, the terminal device includes a CPU and a GPU, and the method includes:

The CPU obtains a plurality of first draw calls, where the plurality of first draw calls invoke vertex data of N to-be-rendered vertices. If a load amount of the CPU is greater than a preset value, the CPU transfers the plurality of first draw calls to the GPU. The GPU obtains M to-be-rendered vertices from the N to-be-rendered vertices based on the vertex data of the N to-be-rendered vertices, where the M to-be-rendered vertices are vertices visible within an angle of view of a user, and M is a positive integer less than N. The GPU updates the plurality of first draw calls based on vertex data of the M to-be-rendered vertices, to obtain a plurality of second draw calls, where the plurality of second draw calls invoke the vertex data of the M to-be-rendered vertices; and The GPU performs graphics rendering based on the plurality of second draw calls.

In this application, when the load amount of the CPU is large, the GPU is triggered to remove an invisible vertex within the angle of view of the user, thereby reducing overheads of a vertex culling operation that needs to be performed on a CPU side. In addition, because a quantity of vertices participating in rendering after the GPU performs vertex culling (culling) is greatly reduced, overheads of the GPU are also reduced, and a game frame rate is improved.

In a possible implementation, each first draw call (draw call) includes a function name, and the method further includes:

The CPU generates P target draw calls based on function names of N draw calls and the invoked vertex data of the to-be-rendered vertices, where the P target draw calls are used to represent the N draw calls, each target draw call is used to represent a part of draw calls of the N draw calls, and function names and invoked vertex data of to-be-rendered vertices of the part of draw calls are the same with each other.

The CPU transfers each target draw call to one first buffer (buffer), and triggers, based on a compute shader call (compute shader call), the GPU to obtain the P target draw calls from P first buffers, where each time a compute shader call may trigger the GPU to obtain one target draw call from one first buffer.

In this embodiment of this application, the CPU may record associated data of each first draw call, and group the first draw calls based on a function name (or referred to as a shader program name) used by each draw call, vertex data of a to-be-rendered vertex that is invoked, and uniform data (the uniform data is input data other than vertex data of the shader program, such as a camera parameter and a model mapping matrix). First draw calls with same vertex data and shader programs are grouped into a same group, and uniform data used by different first draw calls in a same group may be recorded in a first buffer (buffer) (for example, an instance buffer).

In this embodiment of this application, the plurality of first draw calls are combined into an indirect draw call based on a compute shader, so that a quantity of to-be-processed draw calls is reduced, and overheads required by a graphics driver on a CPU side are reduced. In addition, because a quantity of vertices participating in rendering is greatly reduced after the GPU performs vertex culling, overheads of the GPU are reduced, and a game frame rate is improved.

In a possible implementation, the method further includes:

The GPU writes the vertex data of the M to-be-rendered vertices into an indirect draw buffer (indirect draw buffer); and correspondingly, that the GPU performs graphics rendering based on the plurality of second draw calls includes: The CPU triggers, based on an indirect draw call (indirect draw call), the GPU to obtain the vertex data of the M to-be-rendered vertices from the indirect draw buffer, so that the CPU performs graphics rendering based on the plurality of second draw calls. The indirect draw call (indirect draw call) means that when a draw call is executed, a parameter required by the call is not directly input when an API is called, but is specified by using an address of a GPU memory area, where the address includes parameter data required by the draw call. In this embodiment of this application, a compute shader is used to perform a vertex culling (culling) operation on the GPU side, to reduce load on a CPU side. In addition, to avoid a delay caused by reading a culling result from the GPU back to the CPU after execution, an indirect draw call (indirect draw call) is used to enable the GPU side to implement a graphics rendering operation.

In a possible implementation, the N to-be-rendered vertices are used to form a plurality of to-be-rendered model meshes, each to-be-rendered model mesh includes a plurality of triangular networks, vertices of each triangular network include a plurality of to-be-rendered vertices of the N to-be-rendered vertices, and the obtaining M to-be-rendered vertices from the N to-be-rendered vertices based on the vertex data of the N to-be-rendered vertices includes: culling, based on vertex data of the vertices of the triangular networks in each to-be-rendered model mesh, a model mesh in which all or some vertices are invisible within the angle of view of the user from the plurality of to-be-rendered model meshes, to obtain a plurality of culled model meshes, where the plurality of culled model meshes include the M to-be-rendered vertices.

In a possible implementation, the culling, based on vertex data of the vertices of the triangular networks in each to-be-rendered model mesh, a model mesh in which all or some vertices are invisible within the angle of view of the user from the plurality of to-be-rendered model meshes includes: culling, based on the vertex data of the vertices of the triangular networks in each to-be-rendered model mesh by performing at least one of back-face culling, frustum culling, and occlusion culling, the model mesh in which all or some vertices are invisible within the angle of view of the user from the plurality of to-be-rendered model meshes.

In a possible implementation, the load amount of the CPU is related to at least one of the following:
time required for the CPU to perform rendering on a frame of image;
a quantity of API calls that need to be processed when the CPU performs rendering processing on a frame of image; and
frequency usage of the CPU.

According to a third aspect, this application provides a graphics rendering apparatus, where the apparatus is applied to a terminal device, the terminal device includes a graphics processing unit GPU, and the apparatus includes:
an obtaining module, configured to obtain vertex data of N to-be-rendered vertices;
a vertex culling module, configured to: if a load amount of the GPU is greater than a preset value, obtain M to-be-rendered vertices from the N to-be-rendered vertices based on the vertex data of the N to-be-rendered vertices, where the M to-be-rendered vertices are vertices visible within an angle of view of a user, and M is a positive integer less than N; and
a graphics rendering module, configured to transfer vertex data of the M to-be-rendered vertices to the GPU, so that the GPU performs graphics rendering.

In a possible implementation, the N to-be-rendered vertices are used to form a plurality of to-be-rendered model meshes, each to-be-rendered model mesh comprises a plurality of triangular networks, vertices of each triangular network include a plurality of to-be-rendered vertices of the N to-be-rendered vertices, and the vertex culling module is configured to:
cull, based on vertex data of the vertices of the triangular networks in each to-be-rendered model mesh, a model mesh in which all or some vertices are invisible within the angle of view of the user from the plurality of to-be-rendered model meshes, to obtain a plurality of culled model meshes, where the plurality of culled model meshes include the M to-be-rendered vertices

In a possible implementation, the obtaining module is configured to obtain computing resources currently available to a central processing unit CPU.

A triangular network quantity determining module is configured to determine, based on the computing resources, a quantity of triangular networks included in each to-be-rendered model mesh of the plurality of to-be-rendered model meshes, where more computing resources indicates more triangular networks included in each to-be-rendered model mesh, and less computing resources indicates less triangular networks included in each to-be-rendered model mesh.

In a possible implementation, the vertex culling module is configured to cull, based on the vertex data of the vertices of the triangular networks in each to-be-rendered model mesh by performing at least one of back-face culling, frustum culling, and occlusion culling, the model mesh in which all or some vertices are invisible within the angle of view of the user from the plurality of to-be-rendered model meshes.

In a possible implementation, the load amount of the GPU is related to at least one of the following:
a quantity of draw calls (draw calls) that need to be processed when the GPU renders a frame of image;
a quantity of to-be-rendered vertices that need to be processed when the GPU renders a frame of image;
a quantity of to-be-rendered textures that need to be processed when the GPU renders a frame of image; and
frequency usage of the GPU.

In a possible implementation, the obtaining module is configured to obtain a plurality of first draw calls (draw calls), where the plurality of first draw calls (draw calls) invoke the vertex data of the N to-be-rendered vertices; and correspondingly, the graphics rendering module is configured to: update the plurality of first draw calls based on the vertex data of the M to-be-rendered vertices to obtain a plurality of second draw calls, where the plurality of second draw calls invoke the vertex data of the M to-be-rendered vertices; and transfer the plurality of second draw calls to the GPU.

According to a third aspect, this application provides a graphics rendering apparatus, where the apparatus is applied to a terminal device, the terminal device includes a CPU and a GPU, the CPU includes:
an obtaining module, configured to obtain, by the CPU, a plurality of first draw calls, where the plurality of first draw calls invoke vertex data of N to-be-rendered vertices;
a command transfer module, configured to: if a load amount of the CPU is greater than a preset value, transfer, by the CPU, the plurality of first draw calls to the GPU; and
the GPU includes:
   a vertex culling module, configured to: obtain M to-be-rendered vertices from the N to-be-rendered vertices based on the vertex data of the N to-be-rendered vertices, where the M to-be-rendered vertices are vertices visible within an angle of view of a user, and M is a positive integer less than N; and
   update the plurality of first draw calls based on vertex data of the M to-be-rendered vertices, to obtain a plurality of second draw calls, where the plurality of second draw calls invoke the vertex data of the M to-be-rendered vertices; and
   a graphics rendering module, configured to perform graphics rendering based on the plurality of second draw calls.

In a possible implementation, each first draw call (draw call) includes a function name, and the CPU further includes:
a command merging module, configured to: generate P target draw calls based on function names of N draw calls and the invoked vertex data of the to-be-rendered vertices, where the P target draw calls are used to represent the N draw calls, each target draw call is used to represent a part of draw calls of the N draw calls, and function names and invoked vertex data of to-be-rendered vertices of the part of draw calls are the same with each other; and
transfer each target draw call to one first buffer (buffer), and trigger, based on a compute shader call (compute shader call), the GPU to obtain the P target draw calls from P first buffers, where each time a compute shader call may trigger the GPU to obtain one target draw call from one first buffer.

In a possible implementation, the GPU further includes:
a data writing module, configured to write the vertex data of the M to-be-rendered vertices to an indirect draw buffer (indirect draw buffer); and correspondingly, the graphics rendering module is configured to trigger, by the CPU based on an indirect draw call (indirect draw call), the GPU to obtain the vertex data of the M to-be-rendered vertices from the indirect draw buffer, so that the CPU performs graphics rendering based on the plurality of second draw calls.

In a possible implementation, the N to-be-rendered vertices are used to form a plurality of to-be-rendered model meshes, each to-be-rendered model mesh includes a plurality of triangular networks, vertices of each triangular network include a plurality of to-be-rendered vertices in the N to-be-rendered vertices, and the vertex culling module is configured to cull, based on vertex data of the vertices of the triangular networks in each to-be-rendered model mesh, a model mesh in which all or some vertices are invisible within the angle of view of the user from the plurality of to-be-rendered model meshes, to obtain a plurality of culled model meshes, where the plurality of culled model meshes include the M to-be-rendered vertices.

In a possible implementation, the vertex culling module is configured to cull, based on the vertex data of the vertices of the triangular networks in each to-be-rendered model mesh by performing at least one of back-face culling, frustum culling, and occlusion culling, the model mesh in which all or some vertices are invisible within the angle of view of the user from the plurality of to-be-rendered model meshes.

In a possible implementation, the load amount of the CPU is related to at least one of the following:
time required for the CPU to perform rendering on a frame of image;
a quantity of API calls that need to be processed when the CPU performs rendering processing on a frame of image; and
frequency usage of the CPU.

According to a fifth aspect, a computer-readable storage medium is provided. The computer-readable storage medium stores program code, and the program code includes instructions used to execute some or all operations of the method described in the first aspect.

Optionally, the computer-readable storage medium is located inside an electronic device, and the electronic device may be an apparatus that can perform graphics rendering.

According to a sixth aspect, an embodiment of this application provides a computer program product. When the computer program product runs on a communications apparatus, the communications apparatus executes some or all operations of the method described in the first aspect.

According to a seventh aspect, a chip is provided. The chip includes a processor, and the processor is configured to execute some or all operations of the method described in the first aspect.

### BRIEF DESCRIPTION OF DRAWINGS

FIG. 1 is a schematic diagram of a structure of an electronic device according to an embodiment of this application;
FIG. 2 is a schematic diagram of a structure of an electronic device according to an embodiment of this application;
FIG. 3 is a schematic diagram of a structure of an electronic device according to an embodiment of this application;
FIG. 4 is a schematic flowchart of a graphics rendering method according to an embodiment of this application;
FIG. 5 is a schematic flowchart of a graphics rendering method according to an embodiment of this application;
FIG. 6 is a schematic flowchart of a graphics rendering method according to an embodiment of this application;
FIG. 7 is a schematic flowchart of a graphics rendering method according to an embodiment of this application;
FIG. 8 is a schematic flowchart of a graphics rendering method according to an embodiment of this application;
FIG. 9 is a schematic flowchart of a graphics rendering method according to an embodiment of this application;
FIG. 10 is a schematic diagram of a graphics rendering apparatus according to an embodiment of this application;
FIG. 11 is a schematic diagram of a graphics rendering apparatus according to an embodiment of this application;
FIG. 12 is a schematic diagram of a graphics rendering apparatus according to an embodiment of this application; and
FIG. 13 is a schematic diagram of a structure of an electronic device according to an embodiment of this application.

### DESCRIPTION OF EMBODIMENTS

The following describes technical solutions of this application with reference to accompanying drawings.

A graphics rendering method in embodiments of this application may be performed by an electronic device. The electronic device may be a mobile terminal (for example, a smartphone), a computer, a personal digital assistant, a wearable device, an on-board equipment, an Internet-of Things device, or another device that can perform image rendering processing. The electronic device may be a device that runs an Android system, an IOS system, a windows system, or another system.

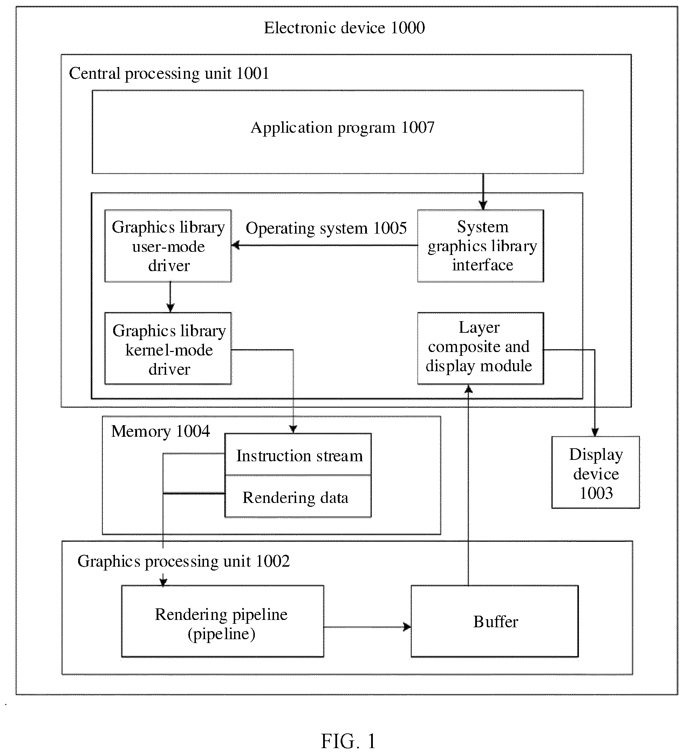

The graphics rendering method in embodiments of this application may be performed by the electronic device. A specific structure of the electronic device may be shown in FIG. 1. The following describes the specific structure of the electronic device in detail with reference to FIG. 1.

In an embodiment, as shown in FIG. 1, the electronic device 1000 may include a central processing unit (CPU) 1001, a graphics processing unit (GPU) 1002, a display device 1003, and a memory 1004. Optionally, the electronic device 1000 may further include at least one communications bus 110 (not shown in FIG. 1), configured to implement connection and communication between components.

It should be understood that alternatively, the components in the electronic device 1000 may be mutually coupled by using another connector, and the another connector may include various interfaces, transmission lines, buses, or the like. Alternatively, the components in the electronic device 1000 may be radioactively connected with the processor 1001 as a center. In embodiments of this application, coupling is mutual electrical connection or communication, including direct connection or indirect connection performed by using another device.

The central processing unit 1001 and the graphics processing unit 1002 may also be connected in a plurality of manners, and are not limited to being connected in the manner shown in FIG. 1. The central processing unit 1001 and the graphics processing unit 1002 in the electronic device 1000 may be located on a same chip, or each may be an independent chip.

The following briefly describes functions of the central processing unit 1001, the graphics processing unit 1002, the display device 1003, and the memory 1004.

The central processing unit 1001 is configured to run an operating system 1005 and an application program 1007. The application program 1007 may be a graphical application program, such as a game or a video player. The operating system 1005 provides a system graphics library interface. The application program 1007 generates an instruction stream used to render a graphic or an image frame and required related rendering data by using the system graphics library interface and a driver program provided by the operating system 1005, such as a graphics library user-mode driver and/or a graphics library kernel-mode driver. A system graphics library includes but is not limited to a system graphics library such as an open graphics library for embedded systems (open graphics library for embedded systems, OpenGL ES), the khronos platform graphics interface (the khronos platform graphics interface), or Vulkan (a cross-platform drawing application programing interface). The instruction stream includes a series of instructions, and these instructions are usually instructions for invoking the system graphics library interface.

Optionally, the central processing unit 1001 may include at least one of the following types of processors: an application processor, one or more microprocessors, a digital signal processor (digital signal processor, DSP), a microcontroller (microcontroller unit, MCU), an artificial intelligence processor, or the like.

The central processing unit 1001 may further include a necessary hardware accelerator, such as an application specific integrated circuit (application specific integrated circuit, ASIC), a field programmable gate array (field programmable gate array, FPGA), or an integrated circuit configured to implement a logical operation. The processor 1001 may be coupled to one or more data buses, configured to transmit data and an instruction between the components in the electronic device 1000.

The graphics processing unit 1002 is configured to: receive a graphics instruction stream sent by the processor 1001, generate a rendering target by using a rendering pipeline (pipeline), and display the rendering target on the display device 1003 by using a layer composite and display module in the operating system.

Optionally, the graphics processing unit 1002 may include a general-purpose graphics processing unit that executes software, such as a GPU or another type of dedicated graphics processing unit.

The display device 1003 is configured to display various images generated by the electronic device 1000. The image may be a graphical user interface (graphical user interface, GUI) in the operating system or image data (including a still image and video data) processed by the graphics processing unit 1002.

Optionally, the display device 1003 may include any suitable type of display, such as a liquid crystal display (liquid crystal display, LCD), a plasma display, or an organic light-emitting diode (organic light-emitting diode, OLED) display.

The memory 1004 is a transmission channel between the central processing unit 1001 and the graphics processing unit 1002, and may be a double data rate synchronous dynamic random access memory (double data rate synchronous dynamic random access memory, DDR SDRAM) or another type of cache.

The rendering pipeline is a series of operations sequentially performed by the graphics processing unit 1002 in a graphic or an image frame rendering process. Typical operations include vertex processing (vertex processing), primitive processing (primitive processing), rasterization (rasterization), fragment processing (fragment Processing), and the like.

With rapid development of communications and chip technologies, mobile devices have become the most important terminal platform for games. Currently, large-scale games with high image quality and high frame rate pose higher requirements on overall performance, especially graphics processing performance, of mobile phones.

As a scene of mobile games becomes larger and more detailed, computing load of an entire rendering process becomes heavier. When game performance is poor, the reason is always that computing capability or data bandwidth resources cannot meet requirements of a game service load. A performance bottleneck may be caused by a CPU or GPU.

The following describes an application scenario of this application.

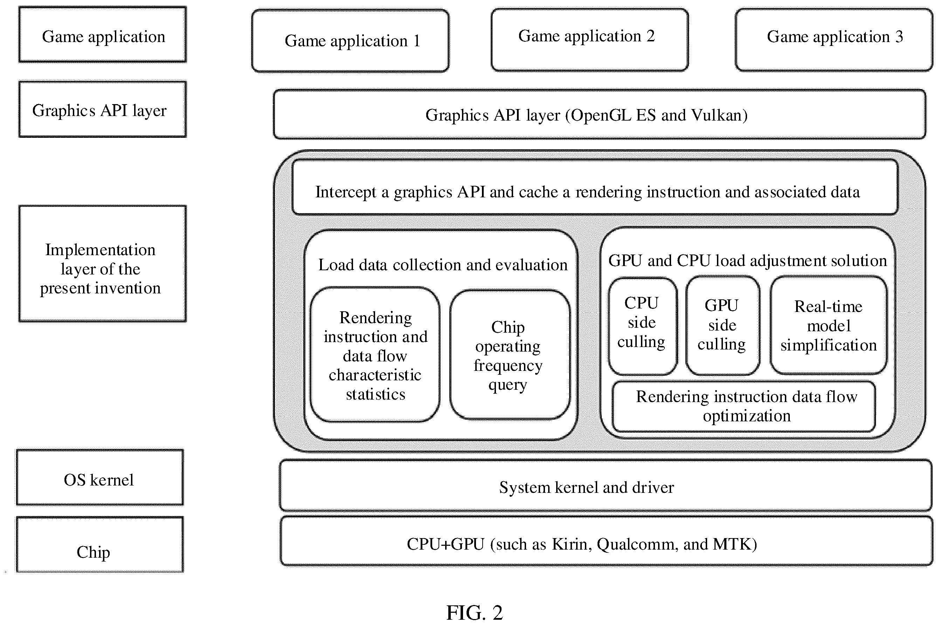

As shown in FIG. 2, an architecture of an application in this application may include an application layer, a graphics API layer, an OS kernel, and an implementation layer of the present invention. The implementation layer of the present invention is located below the graphics API layer (for example, OpenGL and Vulkan) and above the OS kernel and a driver. The implementation layer of the present invention may intercept a graphics API call, cache a rendering instruction stream and associated data, and process intercepted data.

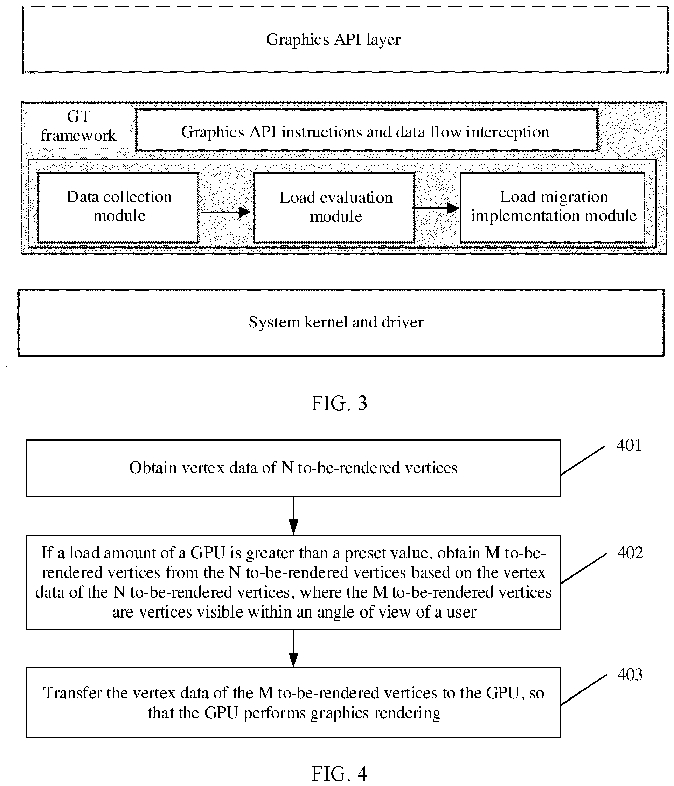

A product implementation form of the present invention may be program code included in a GT framework (full name: GPU Turbo, which is a graphics acceleration framework in a mobile phone system) and run on terminal hardware. An application scenario shown in FIG. 3 is used as an example, program code of the present invention exists in a GT framework of a terminal system, under a graphic API, and above an OS kernel. During running, the program code of the present invention is run in an application process.

For details, refer to FIG. 4. FIG. 4 is a schematic flowchart of a graphics rendering method according to an embodiment of this application. The graphics rendering method may be applied to a terminal device, and the terminal device includes a graphics processing unit GPU. As shown in FIG. 4, the graphics rendering method provided in this embodiment of this application may include the following steps.

401: Obtain vertex data of N to-be-rendered vertices.

In this embodiment of this application, a CPU in the terminal device may obtain a plurality of first draw calls (draw calls), where the plurality of first draw calls invoke the vertex data of the N to-be-rendered vertices. The vertex data of the to-be-rendered vertices may include but is not limited to a vertex location, a normal, UV coordinates, an index, and the like.

The CPU may be located inside the terminal device. The vertex data of the to-be-rendered vertices may be vertex data obtained by the CPU from a buffer module of the terminal device, and the vertex data of the to-be-rendered vertices is vertex data that is used by the GPU to perform graphics rendering processing. The to-be-rendered vertex data obtained by the CPU may be vertex data obtained by using a specific draw call, and the vertex data obtained by using the draw call may be vertex data required for one time of graphics drawing.

A draw call instruction is a graphics application programming interface instruction, a quantity of draw call instructions is the same as a quantity of times of graphics drawing of a cross-platform graphics application interface, and the draw call instructions may specifically include but is not limited to instructions such as glDrawArrays and glDrawElements.

Optionally, the CPU may obtain the vertex data of the N to-be-rendered vertices from a storage module. The storage module of the terminal device caches the vertex data of the N to-be-rendered vertices that are to be used by the GPU to perform graphics rendering processing. When the graphics rendering method is performed by the terminal device, the storage module may be a DDR SDRAM inside the terminal device. When the graphics rendering method is performed by a computer device, the storage module may be a display memory inside the computer device.

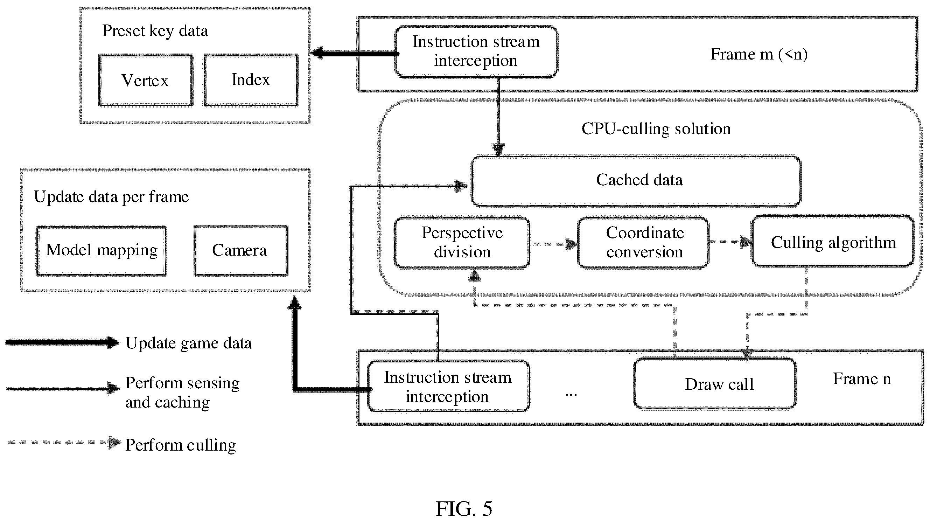

For example, refer to FIG. 5. In a sensing and caching phase, an instruction stream block module may obtain the vertex data of the N to-be-rendered vertices from cached data.

402: If a load amount of the GPU is greater than a preset value, obtain M to-be-rendered vertices from the N to-be-rendered vertices based on the vertex data of the N to-be-rendered vertices, where the M to-be-rendered vertices are vertices visible within an angle of view of a user, and M is a positive integer less than N.

In this embodiment of this application, the CPU may first determine a current load amount of the GPU, where the load amount of the GPU may be related to at least one of the following: a quantity of draw calls (draw calls) that need to be processed when the GPU renders a frame of image, a quantity of to-be-rendered vertices that need to be processed when the GPU renders a frame of image, a quantity of to-be-rendered textures that need to be processed when the GPU renders a frame of image, and frequency usage of the GPU.

In an implementation, the CPU may evaluate the load amount of the GPU based on an intercepted draw call (draw call), and the CPU may use the quantity of draw calls (draw calls) that need to be processed when the GPU renders a frame of image, the quantity of to-be-rendered vertices that need to be processed when the GPU renders a frame of image, and the quantity of to-be-rendered textures that need to be processed when the GPU renders a frame of image as a basis for determining the load amount of the GPU, query a current frequency of the GPU, and use the frequency usage of the GPU as a basis for determining the load amount of the GPU.

For example, when the quantity of draw calls (draw calls) that need to be processed when the GPU renders a frame of image exceeds a specific threshold (for example, 500), the quantity of to-be-rendered vertices that need to be processed when the GPU renders a frame of image exceeds a specific threshold (for example, 500 k), and when the GPU renders a frame of image, if a quantity of to-be-rendered textures that need to be processed exceeds a specific threshold (for example, 200), and current frequency usage of the GPU exceeds a specific threshold (for example, greater than 80% of a highest frequency), the CPU may determine that the load amount of the GPU is greater than the preset value.

It should be understood that the preset value may be configured based on an actual situation. This is not limited in this embodiment of this application.

In this embodiment of this application, if it is determined that the load amount of the GPU is greater than the preset value, an algorithm operation of culling (culling) may be performed on a CPU side, to reduce a calculation amount of the GPU, to reduce the load amount of the GPU.

In this embodiment of this application, the vertex data of the to-be-rendered vertices may be all vertex data or some vertex data required for one time of graphics drawing. In addition to the vertex data within the angle of view of the user, the vertex data of the to-be-rendered vertices may further include vertex data outside the angle of view of the user. That the CPU processes the vertex data of the to-be-rendered vertices to obtain the vertex data within the angle of view of the user is equivalent to removing the vertex data outside the angle of view of the user from to-be-processed vertex data to obtain the vertex data within the angle of view of the user.

It should be understood that the vertex data within the angle of view of the user may be vertex location information of an image of an object visible within the angle of view of the user, and the image of the object visible within the angle of view of the user can be finally obtained by processing the vertex data within the angle of view of the user.

In this embodiment of this application, the CPU may obtain the M to-be-rendered vertices from the N to-be-rendered vertices based on the vertex data of the N to-be-rendered vertices, where the M to-be-rendered vertices are vertices visible within the angle of view of the user.

Specifically, the N to-be-rendered vertices are used to form a plurality of to-be-rendered model meshes, each to-be-rendered model mesh includes a plurality of triangular networks, vertices of each triangular network include a plurality of to-be-rendered vertices in the N to-be-rendered vertices. Correspondingly, the CPU may cull, based on vertex data of the vertices of the triangular networks in each to-be-rendered model mesh, a model mesh in which all or some vertices are invisible within the angle of view of the user from the plurality of to-be-rendered model meshes, to obtain a plurality of culled model meshes, where the plurality of culled model meshes include the M to-be-rendered vertices.

In this embodiment of this application, culling (culling) may be to cull an invisible model mesh in a scene, and finally, only a visible model mesh participates in rendering computing. Culling may include at least one of back-face culling, frustum culling, and occlusion culling. The CPU may obtain a plurality of to-be-rendered model meshes (meshes) from a vertex buffer. The model mesh may be represented by a triangular mesh (or referred to as a triangular network). Each triangular network includes three vertices. Vertex data of the vertices may include but is not limited to a location, a normal, UV coordinates, and the like. One vertex can be shared by a plurality of adjacent triangles. More complex model meshes indicate more triangle vertices.

In this embodiment of this application, triangular networks may be grouped into a plurality of small to-be-rendered model meshes, and each model mesh may include a specific quantity of triangular networks. In some cases, an index sequence of triangle networks of a game is continuous. The triangle networks may be grouped on the continuous index, to establish a model mesh. A quantity of groups may be 8, 16, 32, or the like.

In this embodiment of this application, the CPU may cull, based on the vertex data of the vertices of the triangular networks in each to-be-rendered model mesh by performing at least one of back-face culling, frustum culling, and occlusion culling, the model mesh in which all or some vertices are invisible within the angle of view of the user from the plurality of to-be-rendered model meshes.

The following describes how the CPU culls, by performing at least one of back-face culling, frustum culling, and occlusion culling, the model mesh in which all or some vertices are invisible within the angle of view of the user from the plurality of to-be-rendered model meshes.

In this embodiment of this application, the CPU may cull, based on the vertex data of the vertices of the triangular networks in each to-be-rendered model mesh, the model mesh in which all or some vertices are invisible within the angle of view of the user from the plurality of to-be-rendered model meshes, to obtain a plurality of culled model meshes, where the plurality of culled model meshes include the M to-be-rendered vertices. The CPU may compute a model bounding box (bounding box) for each model mesh, where the model bounding box is a minimum three-dimensional square box including all vertices within the model mesh. Specifically, the CPU may traverse each triangular mesh in the model mesh, search for a minimum value and a maximum value of each triangular mesh on an X-axis, a Y-axis, and a Z-axis respectively, and record the minimum value and the maximum value by using Box Min and Box Max, to obtain the model bounding box (bounding box) of each model mesh. The CPU may further calculate a safe space cone area of each model mesh. The safe space cone area may be used to quickly calculate a data structure indicating whether back-face culling is performed on a model mesh. When a camera position is in a space area defined by the safe space cone, the model mesh is back-face culled. Specifically, for any triangular network, a vertical vector of the triangular network (that is, a normal vector of the triangular network) may be calculated by using two sides of the triangular network, all normal vectors of triangle networks in a model mesh are accumulated and negated, and are used as a central axis. All triangle networks in the model network are traversed to obtain intersections with the central axis, and a farthest intersection point is used as a central point.

In this embodiment of this application, the CPU may perform frustum culling based on a bounding box of each model mesh, and perform back-face culling based on safe space cone area information and a current camera (camera) location. The frustum culling culls a model network that falls outside a frustum, to avoid unnecessary rendering on these objects. Specifically, if a camera is located in a bounding b ox of a model mesh in a world space, the model mesh is reserved; and space conversion is performed on eight points of the model mesh by using a model-view-projection transformation (model-view-projection matrix, MVP) matrix to convert the eight points into a clip space (where the clip space is a coordinate space obtained after MVP transformation is performed on model vertices). For example, if a mapped point in any clip space is located in a frustum space, the model mesh is reserved. If each point is not located in the frustum space, bounding box calculation is performed on the eight mapped points again to form a bounding box based on the clip space. Then, a point with a minimum value and a point with a maximum value of the bounding box are marked with bits. If the model mesh is located on one side of a frustum plane, the model mesh is culled. Otherwise, the model mesh is reserved.

In this embodiment of this application, the back-face culling means that a closed model mesh may always be divided into two parts in a direction of a camera viewpoint. A back part is blocked by a front part, and the back part may be culled and does not need to participate in rendering. Specifically, the CPU may convert an obtained camera position (camera position) in the world space into a local space, and compare the obtained camera position (camera position) with a safe space cone in the model mesh. If the camera (camera) is located in the safe space cone, the model mesh is reserved; otherwise, the model mesh is culled.

In this embodiment of this application, the CPU may further dynamically set, based on an actual CPU load situation, a quantity of triangular networks included in the model mesh. Specifically, the CPU may obtain computing resources currently available to the central processing unit CPU, and determine, based on the computing resources, a quantity of triangular networks included in each to-be-rendered model mesh of the plurality of to-be-rendered model meshes, where more computing resources indicates more triangular networks included in each to-be-rendered model mesh, and less computing resources indicates less triangular networks included in each to-be-rendered model mesh.

In this embodiment of this application, the CPU may adjust the quantity of triangular networks included in each model mesh. If the model mesh includes a large quantity of triangular networks, load of performing culling (culling) on a CPU side is light (a quantity of times of performing culling operations decreases), but a probability that the model mesh is culled is reduced, load on the GPU side increases (a probability that the model mesh is culled is reduced, resulting in that a quantity of remaining to-be-rendered vertices increases, and thereby increasing the load on the GPU side). If a quantity of triangular networks included in the model mesh is small, load of performing culling (culling) on a CPU side is heavy (a quantity of culling operations increases), and a probability that the model mesh is culled increases, load on the GPU side decreases (a probability that the model mesh is culled increases, so that a quantity of remaining to-be-rendered vertices decreases, thereby reducing the load on the GPU side).

Specifically, the CPU may first determine that a quantity of triangular networks included in each model mesh is 1, and evaluate CPU and GPU load. If the CPU side is heavily loaded, the CPU increases the quantity of triangular networks included in each model mesh, to dynamically adjust the load of the CPU and that of the GPU.

In this embodiment, the CPU may dynamically set, based on an actual CPU load situation, the quantity of triangular networks included in the model mesh, to adapt to mobile devices having different CPU computing power.

For example, refer to FIG. 5. In a process of performing culling (or referred to as vertex culling), a draw call (draw call) may be used for perspective division, coordinate conversion, and culling algorithm processing, to remove vertex data of a vertex invisible to the user. In a game data update phase, preset key data and each frame of update data may be updated based on culled vertex data.

403: Transfer vertex data of the M to-be-rendered vertices to the GPU, so that the GPU performs graphics rendering.

In this embodiment of this application, the CPU may update the plurality of first draw calls based on the vertex data of the M to-be-rendered vertices, to obtain a plurality of second draw calls, where the plurality of second draw calls invoke the vertex data of the M to-be-rendered vertices; and transfer the plurality of second draw calls to the GPU.

After vertex culling is completed, vertex data of vertices obtained after the culling may be updated. Specifically, after the culling is completed, corresponding vertex (vertex) data and index (index) data may be updated, and the data is sent to a rendering pipeline (pipeline) of the GPU as data input of a draw call instruction.

In this embodiment of this application, the CPU may send the vertex data of the M to-be-rendered vertices within the angle of view of the user to the GPU for rendering processing.

Optionally, the CPU and the GPU may be located in a same terminal device, or may be separately located in different terminal devices. For example, both the CPU and the GPU are located in a same terminal device, and graphics rendering can be implemented through cooperation between the CPU and the GPU. For another example, the CPU is located in a client device (for example, a terminal device) and the GPU is located in a cloud device (for example, a cloud server), and graphics rendering can be implemented through cooperation between the CPU in the client device and the cloud device. The CPU in the client device may first obtain the vertex data and process the vertex data, and then send the finally obtained vertex data within the angle of view of the user to the GPU for rendering processing. Next, the client device may obtain a graphic obtained after the rendering processing from the cloud device for display.

Optionally, the CPU may store the vertex data of the M to-be-rendered vertices within the angle of view of the user in the storage module, so that the GPU obtains the vertex data within the angle of view of the user from the storage module and performs image rendering processing.

An embodiment of this application provides a graphics rendering method. The method is applied to a terminal device, and the terminal device includes a graphics processing unit GPU. The method includes: obtaining vertex data of N to-be-rendered vertices; and if a load amount of a GPU is greater than a preset value, obtaining M to-be-rendered vertices from the N to-be-rendered vertices based on the vertex data of the N to-be-rendered vertices, where the M to-be-rendered vertices are vertices visible within an angle of view of a user, and M is a positive integer less than N; and transferring vertex data of the M to-be-rendered vertices to the GPU, so that the GPU performs graphics rendering. According to the foregoing method, when the load amount of the GPU is large, a vertex that is invisible in the angle of view of the user is culled, so that a quantity of vertices that need to be rendered on a GPU side is reduced, thereby reducing the load amount of the GPU.

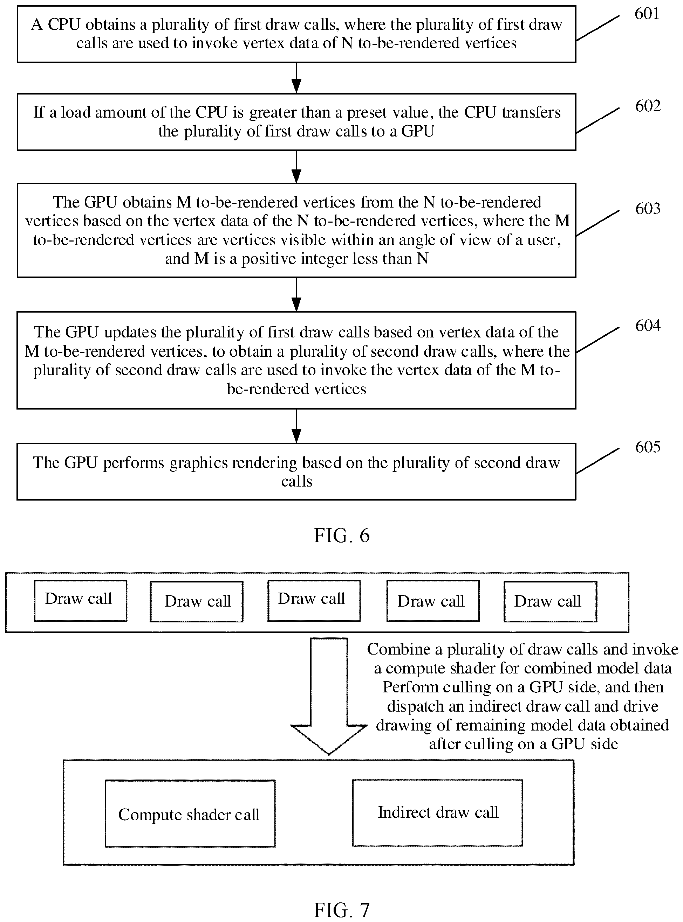

Refer to FIG. 6. An embodiment of this application further provides a schematic flowchart of a graphics rendering method. As shown in FIG. 6, the graphics rendering method may be applied to a terminal device, and the terminal device includes a CPU and a GPU. The graphics rendering method provided in this embodiment of this application includes the following steps.

601: The CPU obtains a plurality of first draw calls, where the plurality of first draw calls invoke vertex data of N to-be-rendered vertices.

In this embodiment of this application, a CPU in a terminal device may obtain a plurality of first draw calls (draw calls), where the plurality of first draw calls invoke the vertex data of the N to-be-rendered vertices. The vertex data of the to-be-rendered vertices may include but is not limited to a vertex location, a normal, UV coordinates, an index, and the like.

The CPU may be located inside the terminal device. The vertex data of the to-be-rendered vertices may be vertex data obtained by the CPU from a buffer module of the terminal device, and the vertex data of the to-be-rendered vertices is vertex data that is used by a GPU to perform graphics rendering processing. The to-be-processed vertex data obtained by the CPU may be vertex data obtained by a specific draw call, and the vertex data obtained by the draw call may be vertex data required for one time of graphics drawing.

The draw call instruction is a graphics application programming interface instruction, a quantity of draw call instructions is the same as a quantity of times of graphics drawing of a cross-platform graphics application programming interface, and the draw call instruction specifically includes an instruction such as glDraw Arrays or glDrawElements.

Optionally, the CPU may obtain the vertex data of the N to-be-rendered vertices from a storage module. The storage module of the terminal device caches the vertex data of the N to-be-rendered vertices that are to be used by the GPU to perform graphics rendering processing. When the graphics rendering method is performed by the terminal device, the storage module may be a DDR SDRAM inside the terminal device. When the graphics rendering method is performed by a computer device, the storage module may be a display memory inside the computer device.

602: If a load amount of the CPU is greater than a preset value, the CPU transfers the plurality of first draw calls to the GPU.

In this embodiment of this application, the CPU may first determine a current load amount of the CPU, where the load amount of the CPU may be related to at least one of the following: time required for the CPU to perform rendering on a frame of image; a quantity of API calls that need to be processed when the CPU performs rendering processing on a frame of image; and frequency usage of the CPU.

In an implementation, the CPU may evaluate the load amount of the CPU based on an intercepted draw call (draw call), and the CPU may use the time required for the CPU to perform rendering processing on a frame of image, the quantity of API calls that need to be processed when the CPU performs rendering processing on a frame of image, and the frequency usage of the CPU as a basis for determining the load amount of the CPU.

For example, when the time required for the CPU to perform rendering processing on a frame of image exceeds a specific threshold (for example, 500), the quantity of API calls that need to be processed when the CPU performs rendering processing on a frame of image exceeds a specific threshold (for example, 500 k), and frequency usage of the CPU exceeds a specific threshold (for example, exceeds 80% of a highest frequency), the CPU may determine that the load amount of the CPU is greater than a preset value.

In this embodiment of this application, to reduce overheads of the CPU, a part of first draw calls may be further combined into one call. Specifically, each first draw call includes a function name, and the CPU may generate P target draw calls based on function names of N draw calls and the invoked vertex data of the to-be-rendered vertices, where the P target draw calls are used to represent the N draw calls, each target draw call is used to represent a part of draw calls of the N draw calls, and function names and invoked vertex data of to-be-rendered vertices of the part of draw calls are the same with each other.

In this embodiment of this application, the CPU may record associated data of each first draw call, and group the first draw calls based on a function name (or referred to as a shader program name) used by each draw call, vertex data of a to-be-rendered vertex that is invoked, and uniform data (the uniform data is input data other than vertex data of the shader program, such as a camera parameter and a model mapping matrix). First draw calls with same vertex data and shader programs are grouped into a same group, and uniform data used by different first draw calls in a same group may be recorded in a first buffer (buffer) (for example, an instance buffer).

The CPU may transfer each target draw call to a first buffer (buffer). The CPU may use an instance buffer corresponding to each target draw call as input data of a compute shader on a GPU side. The compute shader is a program fragment executed on the GPU, and may be used for computing other than graphics rendering, which is generally supported by modern GPU hardware. A game may send the compute shader to the GPU for execution by using OpenGL ES or Vulkan API. Specifically, the CPU may trigger, based on a compute shader call (compute shader call), the GPU to obtain the P target draw calls from P first buffers, where each time a compute shader call may trigger the GPU to obtain one target draw call from one first buffer.

In this embodiment of this application, the GPU may write vertex data of the M to-be-rendered vertices to an indirect draw buffer (indirect draw buffer); and correspondingly, the CPU may trigger, based on an indirect draw call (indirect draw call), the GPU to obtain the vertex data of the M to-be-rendered vertices from the indirect draw buffer, so that the CPU performs graphics rendering based on the plurality of second draw calls. The indirect draw call (indirect draw call) means that when a draw call is executed, a parameter required by the call is not directly input when an API is called, but is specified by using an address of a GPU memory area, where the address includes parameter data required by the draw call. In this embodiment of this application, a compute shader is used to perform a vertex culling (culling) operation on the GPU side, to reduce load on a CPU side. In addition, to avoid a delay caused by reading a culling result from the GPU back to the CPU after execution, an indirect draw call (indirect draw call) is used to enable the GPU side to implement a graphics rendering operation.

603: The GPU obtains the M to-be-rendered vertices from the N to-be-rendered vertices based on the vertex data of the N to-be-rendered vertices, where the M to-be-rendered vertices are vertices visible within an angle of view of a user, and M is a positive integer less than N.

In this embodiment of this application, the N to-be-rendered vertices are used to form a plurality of to-be-rendered model meshes, each to-be-rendered model mesh includes a plurality of triangular networks, vertices of each triangular network include a plurality of to-be-rendered vertices in the N to-be-rendered vertices, the GPU may cull, based on vertex data of the vertices of the triangular networks in each to-be-rendered model mesh, a model mesh in which all or some vertices are invisible within the angle of view of the user from the plurality of to-be-rendered model meshes, to obtain a plurality of culled model meshes, where the plurality of culled model meshes include the M to-be-rendered vertices.

In a possible implementation, the GPU may cull, based on the vertex data of the vertices of the triangular networks in each to-be-rendered model mesh by performing at least one of back-face culling, frustum culling, and occlusion culling, the model mesh in which all or some vertices are invisible within the angle of view of the user from the plurality of to-be-rendered model meshes.

604: The GPU updates the plurality of first draw calls based on the vertex data of the M to-be-rendered vertices, to obtain the plurality of second draw calls, where the plurality of second draw calls invoke the vertex data of the M to-be-rendered vertices.

In this embodiment of this application, the GPU may write the vertex data of the M to-be-rendered vertices to an indirect draw buffer (indirect draw buffer); and the CPU may trigger, based on an indirect draw call (indirect draw call), the GPU to obtain the vertex data of the M to-be-rendered vertices from the indirect draw so that the CPU performs graphics rendering based on the plurality of second draw calls. The indirect draw buffer is a GPU memory area used to store a parameter required by the indirect draw.

605: The GPU performs graphics rendering based on the plurality of second draw calls.

In this embodiment of this application, the compute shader in the GPU may use data in the instance buffer to perform frustum and occlusion culling on the model. After performing the vertex culling operation in step 603, the GPU writes remaining vertex data that needs to be rendered into an indirect draw buffer (indirect draw buffer), and invokes an indirect draw call. The call drives the GPU to obtain data required for drawing from the indirect draw buffer after completing vertex culling (culling) to perform graphics rendering.

Refer to FIG. 7. In this embodiment of this application, a plurality of first draw calls are combined into an indirect draw call based on a compute shader, so that a quantity of to-be-processed draw calls is reduced, and overheads required by a graphics driver on a CPU side are reduced. In addition, because a quantity of vertices participating in rendering is greatly reduced after the GPU performs vertex culling, overheads of the GPU are reduced, and a game frame rate is improved.

This embodiment of this application provides a graphics rendering method. The method is applied to a terminal device, and the terminal device includes a CPU and a GPU, and the method includes: The CPU obtains a plurality of first draw calls, where the plurality of first draw calls invoke vertex data of N to-be-rendered vertices. If a load amount of the CPU is greater than a preset value, the CPU transfers the plurality of first draw calls to the GPU. The GPU obtains M to-be-rendered vertices from the N to-be-rendered vertices based on the vertex data of the N to-be-rendered vertices, where the M to-be-rendered vertices are vertices visible within an angle of view of a user, and M is a positive integer less than N. The GPU updates the plurality of first draw calls based on the vertex data of the M to-be-rendered vertices, to obtain a plurality of second draw calls, where the plurality of second draw calls invoke the vertex data of the M to-be-rendered vertices; and The GPU performs graphics rendering based on the plurality of second draw calls. In this application, when the load amount of the CPU is large, the GPU is triggered to remove an invisible vertex within the angle of view of the user, thereby reducing overheads of a vertex culling operation that needs to be performed on a CPU side. In addition, because a quantity of vertices participating in rendering after the GPU performs vertex culling (culling) is greatly reduced, overheads of the GPU are also reduced, and a game frame rate is improved.

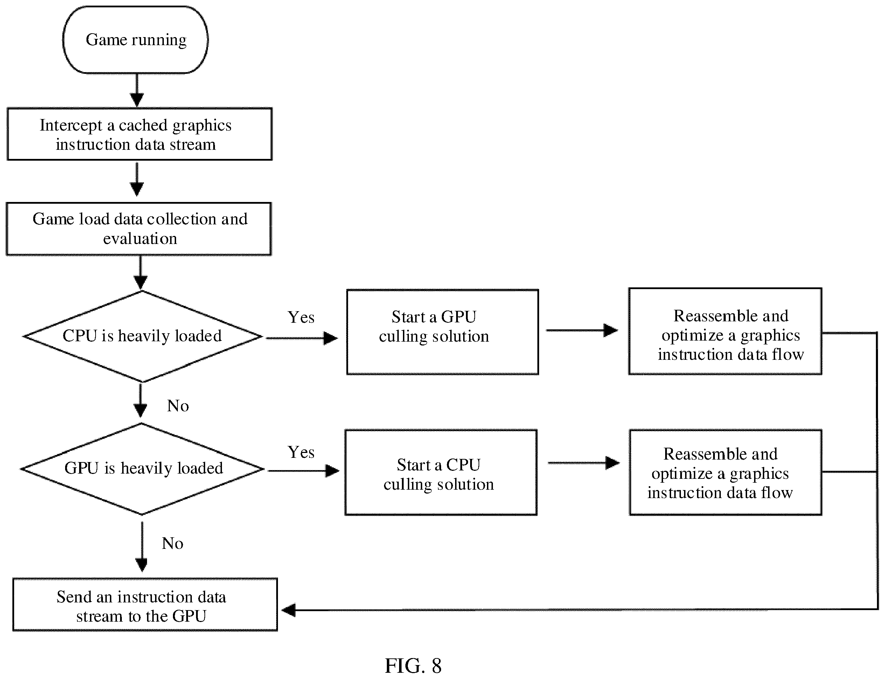

It should be understood that the embodiment corresponding to FIG. 4 and the embodiment corresponding to FIG. 6 may be performed in parallel, and cooperate with each other to reduce overheads of the CPU and the GPU in the terminal device. For example, refer to FIG. 8. After a terminal device runs a game, a CPU may intercept a cached graphics instruction stream, and collect and evaluate game load data. Then, the CPU may first determine a CPU load amount, and when the CPU determines that the CPU load amount exceeds a preset value, execute the graphics rendering method in the embodiment corresponding to FIG. 6; and then may determine a GPU load amount, and when the CPU determines that the GPU load amount exceeds a preset value, execute the graphics rendering method in the embodiment corresponding to FIG. 4. Alternatively, the CPU may first determine a GPU load amount, and when the CPU determines that the GPU load amount exceeds a preset value, perform the graphics rendering method in the embodiment corresponding to FIG. 4; and then may determine a CPU load amount, and when the CPU determines that the CPU load amount exceeds a preset value, perform the graphics rendering method in the embodiment corresponding to FIG. 6.

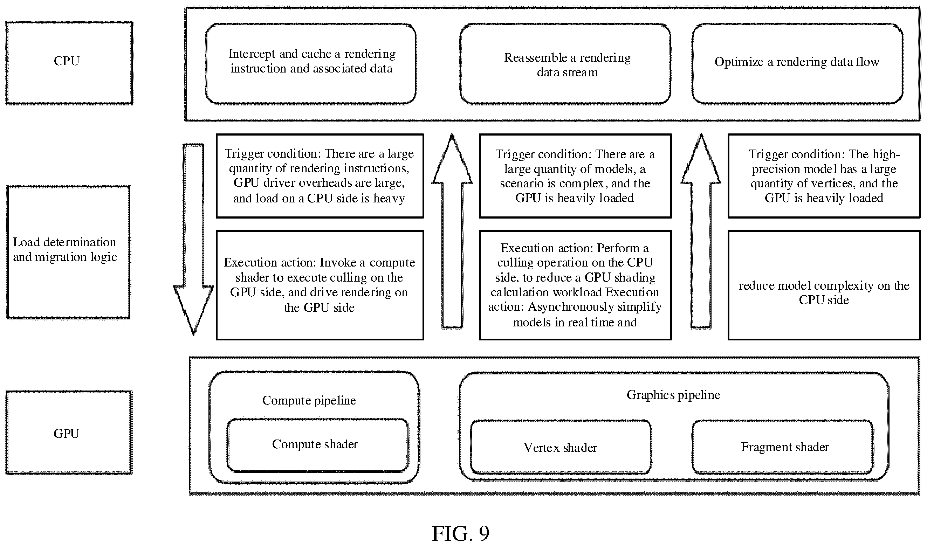

More specifically, refer to FIG. 9. A draw call of a graphic API layer (such as OpenGL and Vulkan) may be intercepted by using a GT framework, and necessary associated data is obtained for subsequent modules to perform analysis and policy enabling. A load determining and decision-making module performs GPU load evaluation based on an intercepted draw call and data. A scenario in which rendering instructions exceeds a certain threshold and to-be-rendered vertices exceeds a certain threshold may be determined as one of necessary conditions for GPU overload. In addition, frequencies of a CPU and a GPU of the system are queried, which is used as an important basis for GPU and CPU load status. If GPU driver overheads are large and load on a CPU side is heavy, a compute shader is called to perform an algorithm operation of vertex culling (culling) on a GPU side, to reduce the load on the CPU side. If the GPU is heavily loaded, an algorithm operation of vertex culling (culling) is performed on the CPU side to reduce a GPU shading calculation amount.

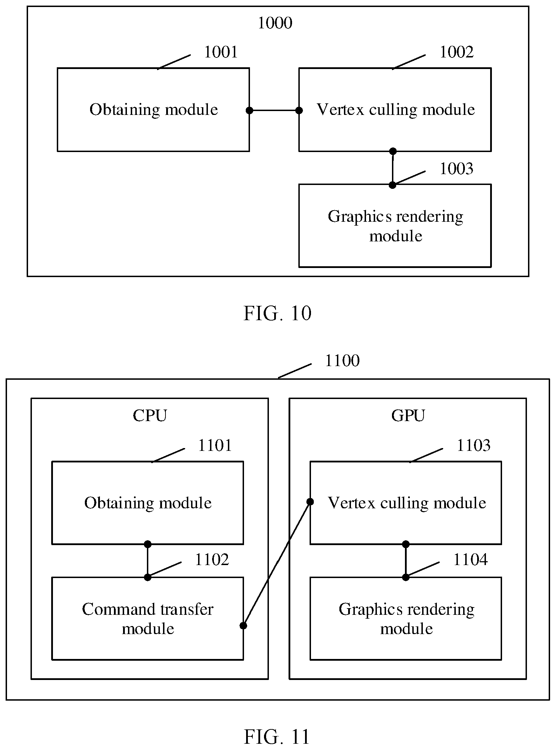

Refer to FIG. 10. This application further provides a graphics rendering apparatus, where the apparatus 1000 is applied to a terminal device, the terminal device includes a graphics processing unit GPU, and the apparatus 1000 includes:
an obtaining module 1001, configured to obtain vertex data of N to-be-rendered vertices;
a vertex culling module 1002, configured to: if a load amount of the GPU is greater than a preset value, obtain M to-be-rendered vertices from the N to-be-rendered vertices based on the vertex data of the N to-be-rendered vertices, where the M to-be-rendered vertices are vertices visible within an angle of view of a user, and M is a positive integer less than N; and
a graphics rendering module 1003, configured to transfer vertex data of the M to-be-rendered vertices to the GPU, so that the GPU performs graphics rendering.

In a possible implementation, the N to-be-rendered vertices are used to form a plurality of to-be-rendered model meshes, each to-be-rendered model mesh includes a plurality of triangular networks, vertices of each triangular network include a plurality of to-be-rendered vertices of the N to-be-rendered vertices, and the vertex culling module 1002 is configured to:
cull, based on vertex data of the vertices of the triangular networks in each to-be-rendered model mesh, a model mesh in which all or some vertices are invisible within the angle of view of the user from the plurality of to-be-rendered model meshes, to obtain a plurality of culled model meshes, where the plurality of culled model meshes include the M to-be-rendered vertices.

In a possible implementation, the obtaining module 1001 is configured to obtain computing resources currently available to a central processing unit CPU.

A triangular network quantity determining module is configured to determine, based on the computing resources, a quantity of triangular networks included in each to-be-rendered model mesh of the plurality of to-be-rendered model meshes, where more computing resources indicates more triangular networks included in each to-be-rendered model mesh, and less computing resources indicates less triangular networks included in each to-be-rendered model mesh.

In a possible implementation, the vertex culling module 1002 is configured to cull, based on the vertex data of the vertices of the triangular networks in each to-be-rendered model mesh by performing at least one of back-face culling, frustum culling, and occlusion culling, the model mesh in which all or some vertices are invisible within the angle of view of the user from the plurality of to-be-rendered model meshes.

In a possible implementation, the load amount of the GPU is related to at least one of the following:
a quantity of draw calls (draw calls) that need to be processed when the GPU renders a frame of image;
a quantity of to-be-rendered vertices that need to be processed when the GPU renders a frame of image;
a quantity of to-be-rendered textures that need to be processed when the GPU renders a frame of image; and
frequency usage of the GPU.

In a possible implementation, the obtaining module 1001 is configured to obtain a plurality of first draw calls (draw calls), where the plurality of first draw calls (draw calls) invoke the vertex data of the N to-be-rendered vertices; and correspondingly, the graphics rendering module is configured to: update the plurality of first draw calls based on the vertex data of the M to-be-rendered vertices to obtain a plurality of second draw calls, where the plurality of second draw calls invoke the vertex data of the M to-be-rendered vertices; and transfer the plurality of second draw calls to the GPU.

Refer to FIG. 11. This application further provides a graphics rendering apparatus 1100, where the apparatus is applied to a terminal device, the terminal device includes a CPU and a GPU, the CPU includes:
an obtaining module 1101, configured to obtain, by the CPU, a plurality of first draw calls, where the plurality of first draw calls invoke vertex data of N to-be-rendered vertices;
a command transfer module 1102, configured to: if a load amount of the CPU is greater than a preset value, transfer, by the CPU, the plurality of first draw calls to the GPU; and
the GPU includes:
   a vertex culling module 1103, configured to: obtain M to-be-rendered vertices from the N to-be-rendered vertices based on the vertex data of the N to-be-rendered vertices, where the M to-be-rendered vertices are vertices visible within an angle of view of a user, and M is a positive integer less than N; and
   update the plurality of first draw calls based on vertex data of the M to-be-rendered vertices, to obtain a plurality of second draw calls, where the plurality of second draw calls invoke the vertex data of the M to-be-rendered vertices; and
   a graphics rendering module 1104, configured to perform graphics rendering based on the plurality of second draw calls.

In a possible implementation, each first draw call (draw call) includes a function name, and the CPU further includes:
a command merging module, configured to: generate P target draw calls based on function names of N draw calls and the invoked vertex data of the to-be-rendered vertices, where the P target draw calls are used to represent the N draw calls, each target draw call is used to represent a part of draw calls of the N draw calls, and function names and invoked vertex data of to-be-rendered vertices of the part of draw calls are the same with each other; and
transfer each target draw call to one first buffer (buffer), and trigger, based on a compute shader call (compute shader call), the GPU to obtain the P target draw calls from P first buffers, where each time a compute shader call may trigger the GPU to obtain one target draw call from one first buffer.

In a possible implementation, the GPU further includes:
a data writing module, configured to write the vertex data of the M to-be-rendered vertices to an indirect draw buffer (indirect draw buffer); and correspondingly, the graphics rendering module is configured to trigger, by the CPU based on an indirect draw call (indirect draw call), the GPU to obtain the vertex data of the M to-be-rendered vertices from the indirect draw buffer, so that the CPU performs graphics rendering based on the plurality of second draw calls.

In a possible implementation, the N to-be-rendered vertices are used to form a plurality of to-be-rendered model meshes, each to-be-rendered model mesh includes a plurality of triangular networks, vertices of each triangular network include a plurality of to-be-rendered vertices in the N to-be-rendered vertices, and the vertex culling module is configured to cull, based on vertex data of the vertices of the triangular networks in each to-be-rendered model mesh, a model mesh in which all or some vertices are invisible within the angle of view of the user from the plurality of to-be-rendered model meshes, to obtain a plurality of culled model meshes, where the plurality of culled model meshes include the M to-be-rendered vertices.

In a possible implementation, the vertex culling module is configured to cull, based on the vertex data of the vertices of the triangular networks in each to-be-rendered model mesh by performing at least one of back-face culling, frustum culling, and occlusion culling, the model mesh in which all or some vertices are invisible within the angle of view of the user from the plurality of to-be-rendered model meshes.

In a possible implementation, the load amount of the CPU is related to at least one of the following:
time required for the CPU to perform rendering on a frame of image;
a quantity of API calls that need to be processed when the CPU performs rendering processing on a frame of image; and
frequency usage of the CPU.

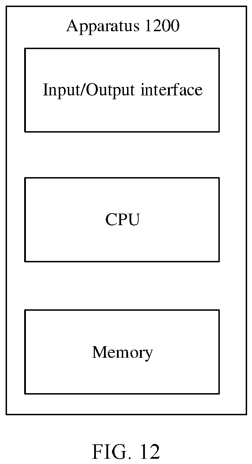

In addition, this application further provides a graphics rendering apparatus. FIG. 12 is a schematic block diagram of a graphics rendering apparatus according to an embodiment of this application. The apparatus 1200 shown in FIG. 12 includes an input/output interface, a memory, and a CPU.

The memory is configured to store a program. When the program stored in the memory is executed by the CPU, the CPU is specifically configured to:
obtain vertex data of N to-be-rendered vertices by using the input/output interface; and if a load amount of a GPU is greater than a preset value, and obtain, by using the CPU, M to-be-rendered vertices from the N to-be-rendered vertices based on the vertex data of the N to-be-rendered vertices, where the M to-be-rendered vertices are vertices visible within an angle of view of a user, and M is a positive integer less than N; and transfer vertex data of the M to-be-rendered vertices to the GPU, so that the GPU performs graphics rendering. The apparatus 1200 may further include the GPU.

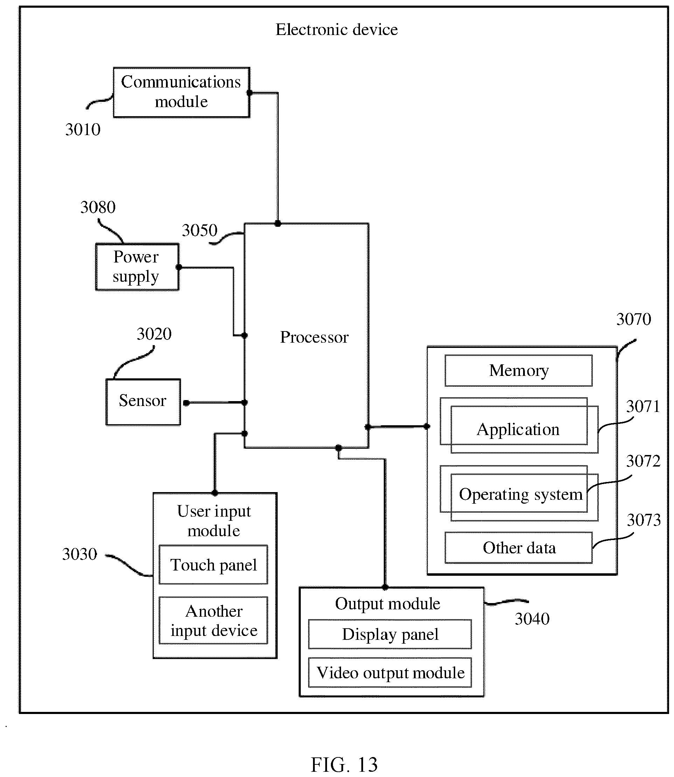

FIG. 13 is a schematic diagram of a structure of a terminal device according to an embodiment of this application.

It should be understood that a specific structure of the apparatus 1200 shown in FIG. 12 may be shown in FIG. 13.

The terminal device in FIG. 13 includes a communications module 3010, a sensor 3020, a user input module 3030, an output module 3040, a processor 3050, a memory 3070, and a power supply 3080. The processor 3050 may include one or more CPUs.

The terminal device shown in FIG. 13 may execute steps of the graphics rendering method in embodiments of this application. Specifically, the one or more CPUs in the processor 3050 may execute the steps of the graphics rendering method in embodiments of this application.

The following describes the modules in the terminal device in FIG. 13 in detail.

The communications module 3010 may include at least one module that can enable the terminal device to communicate with another terminal device. For example, the communications module 3010 may include one or more of a wired network interface, a broadcast receiving module, a mobile communications module, a wireless Internet module, a local area communications module, a location (or positioning) information module, and the like.

For example, the communications module 3010 can obtain a game picture from a game server end in real time.

The sensor 3020 may sense some operations of a user, and the sensor 3020 may include a distance sensor, a touch sensor, and the like. The sensor 3020 may sense an operation such as touching a screen or approaching a screen by the user. For example, the sensor 3020 can sense some operations of the user in a game interface.

The user input module 3030 is configured to: receive entered digital information or character information or a contact touch operation/contactless gesture, and receive signal input related to user settings and function control of a system, and the like. The user input module 3030 includes a touch panel and/or another input device. For example, the user may control a game by using the user input module 3030.

The output module 3040 includes a display panel, configured to display information entered by the user, information provided for the user, various menu interfaces of the system, and the like.

Optionally, the display panel may be configured in a form of a liquid crystal display (liquid crystal display, LCD), an organic light-emitting diode (organic light-emitting diode, OLED), or the like. In some other embodiments, the touch panel may cover the display panel, to form a touch display screen.

In addition, the output module 3040 may further include a video output module, an alarm module, a tactile module, and the like. The video output module may display a game picture obtained after graphics rendering.

The power supply 3080 may receive external power and internal power under control of the processor 3050, and provide power required for running the modules in the terminal device.

The processor 3050 includes the one or more CPUs, and the processor 3050 further includes one or more GPUs.

When the processor 3050 includes a plurality of CPUs, the plurality of CPUs may be integrated on a same chip, or may be separately integrated on different chips.

When the processor 3050 includes plurality of GPUs, the plurality of GPUs may be integrated on a same chip, or may be separately integrated on different chips.

When the processor 3050 includes both the CPU and the GPU, the CPU and the GPU may be integrated on a same chip.

For example, when the terminal device shown in FIG. 13 is a smartphone, one CPU and one GPU are usually related to image processing in a processor in the smartphone. The CPU and the GPU herein each may include a plurality of cores.

The memory 3070 may store a computer program, and the computer program includes an operating system program 3072, an application program 3071, and the like. A typical operating system is a system used for a desktop computer or a notebook computer, such as Windows of Microsoft or macOS of Apple.

The memory 3070 may be one or more of the following types: a flash (flash) memory, a memory of a hard disk type, a memory of a micro multimedia card type, a card-type memory (for example, an SD or XD memory), a random access memory (random access memory, RAM), a static random access memory (static RAM, SRAM), a read-only memory (read only memory, ROM), an electrically erasable programmable read-only memory (electrically erasable programmable read-only memory, EEPROM), a programmable read-only memory (programmable ROM, PROM), a magnetic memory, a magnetic disk, or an optical disc. In some other embodiments, the memory 3070 may be a network storage device on the Internet. The system may perform an operation such as updating or reading on the memory 3070 on the Internet.

For example, the memory 3070 may store a computer program (the computer program is a program corresponding to the graphics rendering method in embodiments of this application). When the processor 3050 executes the computer program, the processor 3050 can execute the graphics rendering method in embodiments of this application.

The memory 3070 further stores other data 3073 in addition to the computer program. For example, the memory 3070 may store data in a processing process of the graphics rendering method in this application.

A connection relationship among the modules in FIG. 13 is only an example. A terminal device provided in any embodiment of this application may also be applied to a terminal device using another connection manner. For example, all modules are connected by using a bus.

A person of ordinary skill in the art may be aware that, in combination with the examples described in embodiments disclosed herein, units and algorithm steps may be implemented by electronic hardware or a combination of computer software and electronic hardware. Whether the functions are performed by hardware or software depends on particular applications and design constraint conditions of the technical solutions. A person skilled in the art may use different method to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communications connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected depending on actual requirements to achieve the objectives of the solutions in embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A graphics rendering method, wherein the method is applied to a terminal device, the terminal device comprises a graphics processing unit GPU, and the method comprises:
obtaining vertex data of N to-be-rendered vertices, wherein N is a positive integer;
if a load amount of the GPU is greater than a preset value, obtaining M to-be-rendered vertices from the N to-be-rendered vertices based on the vertex data of the N to-be-rendered vertices, wherein the M to-be-rendered vertices are vertices visible within an angle of view of a user, and M is a positive integer less than N; and
transferring vertex data of the M to-be-rendered vertices to the GPU, so that the GPU performs graphics rendering.

2. The method according to claim 1, wherein the N to-be-rendered vertices are used to form a plurality of to-be-rendered model meshes, each to-be-rendered model mesh comprises a plurality of triangular networks, vertices of each triangular network comprise a plurality of to-be-rendered vertices of the N to-be-rendered vertices, and the obtaining M to-be-rendered vertices from the N to-be-rendered vertices based on the vertex data of the N to-be-rendered vertices comprises:
culling, based on vertex data of vertices of the triangular networks in each to-be-rendered model mesh, a model mesh in which all or some vertices are invisible within the angle of view of the user from the plurality of to-be-rendered model meshes, to obtain a plurality of culled model meshes, wherein the plurality of culled model meshes comprise the M to-be-rendered vertices.

3. The method according to claim 2, wherein the method further comprises:
obtaining computing resources currently available to a central processing unit CPU; and
determining, based on the computing resources, a quantity of triangular networks comprised in each to-be-rendered model mesh of the plurality of to-be-rendered model meshes, wherein more computing resources indicates more triangular networks comprised in each to-be-rendered model mesh, and less computing resources indicates less triangular networks comprised in each to-be-rendered model mesh.

4. The method according to claim 2 or 3, wherein the culling, based on vertex data of vertices of the triangular networks in each to-be-rendered model mesh, a model mesh in which all or some vertices are invisible within the angle of view of the user from the plurality of to-be-rendered model meshes comprises:
culling, based on the vertex data of the vertices of the triangular networks in each to-be-rendered model mesh by performing at least one of back-face culling, frustum culling, and occlusion culling, the model mesh in which all or some vertices are invisible within the angle of view of the user from the plurality of to-be-rendered model meshes.

5. The method according to any one of claims 1 to 4, wherein the load amount of the GPU is related to at least one of the following:
a quantity of draw calls draw calls that need to be processed when the GPU renders a frame of image;
a quantity of to-be-rendered vertices that need to be processed when the GPU renders a frame of image;
a quantity of to-be-rendered textures that need to be processed when the GPU renders a frame of image; or frequency usage of the GPU.

6. The method according to any one of claims 1 to 5, wherein the obtaining vertex data of N to-be-rendered vertices comprises: obtaining a plurality of first draw calls draw calls, wherein the plurality of first draw calls invoke the vertex data of the N to-be-rendered vertices; and correspondingly, the transferring vertex data of the M to-be-rendered vertices to the GPU comprises:
updating the plurality of first draw calls based on the vertex data of the M to-be-rendered vertices, to obtain a plurality of second draw calls, wherein the plurality of second draw calls invoke the vertex data of the M to-be-rendered vertices; and
transferring the plurality of second draw calls to the GPU.

7. A graphics rendering method, wherein the method is applied to a terminal device, the terminal device comprises a CPU and a GPU, and the method comprises:
obtaining, by the CPU, a plurality of first draw calls, wherein the plurality of first draw calls invoke vertex data of N to-be-rendered vertices;
if a load amount of the CPU is greater than a preset value, transferring, by the CPU, the plurality of first draw calls to the GPU;
obtaining, by the GPU, M to-be-rendered vertices from the N to-be-rendered vertices based on the vertex data of the N to-be-rendered vertices, wherein the M to-be-rendered vertices are vertices visible within an angle of view of a user, and M is a positive integer less than N;
updating, by the GPU, the plurality of first draw calls based on vertex data of the M to-be-rendered vertices, to obtain a plurality of second draw calls, wherein the plurality of second draw calls invoke the vertex data of the M to-be-rendered vertices; and
performing, by the GPU, graphics rendering based on the plurality of second draw calls.

8. The method according to claim 7, wherein each first draw call comprises a function name, and the method further comprises:
generating, by the CPU, P target draw calls based on function names of N draw calls and the invoked vertex data of the to-be-rendered vertices, wherein the P target draw calls are used to represent the N draw calls, each target draw call is used to represent a part of draw calls of the N draw calls, and function names and invoked vertex data of to-be-rendered vertices of the part of draw calls are the same with each other; and
transferring, by the CPU, each target draw call to one first buffer buffer, and triggering, based on a compute shader call (compute shader call), the GPU to obtain the P target draw calls from P first buffers, wherein each time a compute shader call may trigger the GPU to obtain one target draw call from one first buffer.

9. The method according to claim 7 or 8, wherein the method further comprises:
writing, by the GPU, the vertex data of the M to-be-rendered vertices into an indirect draw buffer (indirect draw buffer); and correspondingly, the performing, by the GPU, graphics rendering based on the plurality of second draw calls comprises:
triggering, by the CPU based on an indirect draw call (indirect draw call), the GPU to obtain the vertex data of the M to-be-rendered vertices from the indirect draw buffer, so that the CPU performs graphics rendering based on the plurality of second draw calls.

10. The method according to any one of claims 7 to 9, wherein the N to-be-rendered vertices are used to form a plurality of to-be-rendered model meshes, each to-be-rendered model mesh comprises a plurality of triangular networks, vertices of each triangular network comprise a plurality of to-be-rendered vertices of the N to-be-rendered vertices, and the obtaining M to-be-rendered vertices from the N to-be-rendered vertices based on the vertex data of the N to-be-rendered vertices comprises:
culling, based on vertex data of the vertices of the triangular networks in each to-be-rendered model mesh, a model mesh in which all or some vertices are invisible within the angle of view of the user from the plurality of to-be-rendered model meshes, to obtain a plurality of culled model meshes, wherein the plurality of culled model meshes comprise the M to-be-rendered vertices.

11. The method according to claim 10, wherein the culling, based on vertex data of the vertices of the triangular networks in each to-be-rendered model mesh, a model mesh in which all or some vertices are invisible within the angle of view of the user from the plurality of to-be-rendered model meshes comprises:
culling, based on the vertex data of the vertices of the triangular networks in each to-be-rendered model mesh by performing at least one of back-face culling, frustum culling, and occlusion culling, the model mesh in which all or some vertices are invisible within the angle of view of the user from the plurality of to-be-rendered model meshes.

12. The method according to any one of claims 7 to 11, wherein the load amount of the CPU is related to at least one of the following:
time required for the CPU to perform rendering on a frame of image;
a quantity of API calls that need to be processed when the CPU performs rendering processing on a frame of image; and
frequency usage of the CPU.

13. A graphics rendering apparatus, wherein the apparatus is applied to a terminal device, the terminal device comprises a graphics processing unit GPU, and the apparatus comprises:
an obtaining module, configured to obtain vertex data of N to-be-rendered vertices;
a vertex culling module, configured to: if a load amount of the GPU is greater than a preset value, obtain M to-be-rendered vertices from the N to-be-rendered vertices based on the vertex data of the N to-be-rendered vertices, wherein the M to-be-rendered vertices are vertices visible within an angle of view of a user, and M is a positive integer less than N; and
a graphics rendering module, configured to transfer vertex data of the M to-be-rendered vertices to the GPU, so that the GPU performs graphics rendering.

14. The apparatus according to claim 13, wherein the N to-be-rendered vertices are used to form a plurality of to-be-rendered model meshes, each to-be-rendered model mesh comprises a plurality of triangular networks, vertices of each triangular network comprise a plurality of to-be-rendered vertices of the N to-be-rendered vertices, and the vertex culling module is configured to:
cull, based on vertex data of the vertices of the triangular networks in each to-be-rendered model mesh, a model mesh in which all or some vertices are invisible within the angle of view of the user from the plurality of to-be-rendered model meshes, to obtain a plurality of culled model meshes, wherein the plurality of culled model meshes comprise the M to-be-rendered vertices.

15. The apparatus according to claim 14, wherein the obtaining module is configured to obtain computing resources currently available to a central processing unit CPU; and
a triangular network quantity determining module is configured to determine, based on the computing resources, a quantity of triangular networks comprised in each to-be-rendered model mesh of the plurality of to-be-rendered model meshes, wherein more computing resources indicates more triangular networks comprised in each to-be-rendered model mesh, and less computing resources indicates less triangular networks comprised in each to-be-rendered model mesh.

16. The apparatus according to claim 14 or 15, wherein the vertex culling module is configured to cull, based on the vertex data of the vertices of the triangular networks in each to-be-rendered model mesh by performing at least one of back-face culling, frustum culling, and occlusion culling, the model mesh in which all or some vertices are invisible within the angle of view of the user from the plurality of to-be-rendered model meshes.

17. The apparatus according to any one of claims 13 to 16, wherein the load amount of the GPU is related to at least one of the following:
a quantity of draw calls draw calls that need to be processed when the GPU renders a frame of image;
a quantity of to-be-rendered vertices that need to be processed when the GPU renders a frame of image;
a quantity of to-be-rendered textures that need to be processed when the GPU renders a frame of image; and
frequency usage of the GPU.

18. The apparatus according to any one of claims 13 to 17, wherein the obtaining module is configured to obtain a plurality of first draw calls draw calls, wherein the plurality of first draw calls draw calls invoke the vertex data of the N to-be-rendered vertices; and correspondingly, the graphics rendering module is configured to: update the plurality of first draw calls based on the vertex data of the M to-be-rendered vertices to obtain a plurality of second draw calls, wherein the plurality of second draw calls invoke the vertex data of the M to-be-rendered vertices; and transfer the plurality of second draw calls to the GPU.

19. A graphics rendering apparatus, wherein the apparatus is applied to a terminal device, the terminal device comprises a CPU and a GPU, the CPU comprises:
an obtaining module, configured to obtain, by the CPU, a plurality of first draw calls, wherein the plurality of first draw calls invoke vertex data of N to-be-rendered vertices;
a command transfer module, configured to: if a load amount of the CPU is greater than a preset value, transfer, by the CPU, the plurality of first draw calls to the GPU; and
the GPU comprises:
a vertex culling module, configured to: obtain M to-be-rendered vertices from the N to-be-rendered vertices based on the vertex data of the N to-be-rendered vertices, wherein the M to-be-rendered vertices are vertices visible within an angle of view of a user, and M is a positive integer less than N; and
update the plurality of first draw calls based on vertex data of the M to-be-rendered vertices, to obtain a plurality of second draw calls, wherein the plurality of second draw calls invoke the vertex data of the M to-be-rendered vertices; and
a graphics rendering module, configured to perform graphics rendering based on the plurality of second draw calls.

20. The apparatus according to claim 19, wherein each first draw call comprises a function name, and the CPU further comprises:
a command merging module, configured to: generate P target draw calls based on function names of N draw calls and the invoked vertex data of the to-be-rendered vertices, wherein the P target draw calls are used to represent the N draw calls, each target draw call is used to represent a part of draw calls of the N draw calls, and function names and invoked vertex data of to-be-rendered vertices of the part of draw calls are the same with each other; and
transfer each target draw call to one first buffer buffer, and trigger, based on a compute shader call (compute shader call), the GPU to obtain the P target draw calls from P first buffers, wherein each time a compute shader call may trigger the GPU to obtain one target draw call from one first buffer.

21. The apparatus according to claim 19 or 20, wherein the GPU further comprises:
a data writing module, configured to write the vertex data of the M to-be-rendered vertices to an indirect draw buffer (indirect draw buffer); and correspondingly, the graphics rendering module is configured to trigger, by the CPU based on an indirect draw call (indirect draw call), the GPU to obtain the vertex data of the M to-be-rendered vertices from the indirect draw buffer, so that the CPU performs graphics rendering based on the plurality of second draw calls.

22. The apparatus according to any one of claims 19 to 21, wherein the N to-be-rendered vertices are used to form a plurality of to-be-rendered model meshes, each to-be-rendered model mesh comprises a plurality of triangular networks, vertices of each triangular network comprise a plurality of to-be-rendered vertices in the N to-be-rendered vertices, and the vertex culling module is configured to cull, based on vertex data of the vertices of the triangular networks in each to-be-rendered model mesh, a model mesh in which all or some vertices are invisible within the angle of view of the user from the plurality of to-be-rendered model meshes, to obtain a plurality of culled model meshes, wherein the plurality of culled model meshes comprise the M to-be-rendered vertices.

23. The apparatus according to claim 22, wherein the vertex culling module is configured to cull, based on the vertex data of the vertices of the triangular networks in each to-be-rendered model mesh by performing at least one of back-face culling, frustum culling, and occlusion culling, the model mesh in which all or some vertices are invisible within the angle of view of the user from the plurality of to-be-rendered model meshes.

24. The apparatus according to any one of claims 19 to 23, wherein the load amount of the CPU is related to at least one of the following:
time required for the CPU to perform rendering on a frame of image;
a quantity of API calls that need to be processed when the CPU performs rendering processing on a frame of image; and
frequency usage of the CPU.

25. A non-volatile computer-readable storage medium, wherein the non-volatile readable storage medium comprises computer instructions, configured to perform the graphics rendering method according to any one of claims 1 to 12.

26. A computer device, wherein the computer device comprises a memory and a processor, the memory stores code, and the processor is configured to obtain the code to perform the graphics rendering method according to any one of claims 1 to 12.

27. A computer program product, comprising computer instructions, wherein when the computer instructions are executed by one or more processors, the computer instructions are used to implement the graphics rendering method according to any one of claims 1 to 12.
